# EUROPÄISCHE PATENTSCHRIFT

(11) **EP 1 561 983 B1**
(45) Veröffentlichungstag und Bekanntmachung des Hinweises auf die Patenterteilung: **23.09.2009**
(21) Anmeldenummer: 05100654.2
(22) Anmeldetag: 01.02.2005
(51) Int. Cl.: F16L 3/16

(54) **Schwenkbare Aufhängungsvorrichtung**
Pivotable suspension element
Elément de suspension pivotable

(30) Priorität: 09.02.2004 DE 102004006204
(43) Veröffentlichungstag der Anmeldung: 10.08.2005
(73) Patentinhaber: HILTI Aktiengesellschaft, 9494 Schaan (LI)
(72) Erfinder: Herb, Armin, 86974, Apfeldorf (DE)
(74) Vertreter: Wildi, Roland

(56) Entgegenhaltungen:
- EP-A- 0 452 256
- EP-A- 0 620 395
- US-A- 2 953 874

## Beschreibung

Die Erfindung bezeichnet eine Trägeranbindung für abgehängte Lasten, insbesondere für an Trägern einer Dachkonstruktion abgehängte Montageschienen.

In Industriehallen, die üblicherweise aus Stahl- und Stahlbetonkonstruktie nen bestehen, werden Montageschienen als Befestigungsmöglichkeiten für Haustechnik unc in Rohren und Leitungen transportierten Prozessmedien benutzt. Für flächendeckende Befestigungsmöglichkeiten werden bei den Abhängekonstruktionen Montageschienen rasterartig an die Träger der Halle gehängt. Wegen der grossen Trägerabstände der Tragkonstruktion muss die Abhängekonstruktion senkrecht und schräg vcm Träger zum Schienenraster geführt werden. Die Schrägabhängung wird dabei in Knotenpunkten zusammengeführt und über Knotenverbinder verbunden.

Nach der US4666109 bilden Befestigungsvorrichtungen mit länglichen Stützen endseitig ein Kugelkalottenlager aus, wodurch die Stützen in zwei verschiedenen Neigungsebenen schwenkbar sind. Eine steife Festlegung der Stützen in dem Kugelkalottenlager ist nicht möglich.

Nach der DE19946222C1 werden Rohre über Rohtschellen befestigt, die mittels Gewindestangen an der Decke abgehängt sind. Die Gewindestangen sind an der Decke über Schräghänger befestigt, welche ein Führungsschlitz aufweisen in einem zylindermantelsegmentförmigen Abschnitt aufweisen, wodurch die Gew ndestangen in verschiedenen Neigungen zu genau einer Achse festlegbar sind.

Nach der US 2,953,874 A weist eine Trägeranbindung für abgehängte Lasten ein in Beton eingiessbares Gehäuse mit einer Schwenkelementaufnahme sowie eine in zwei Schwenkebenen schwenkbar festlegbare Schwenkmutter mit einem Innengewinde auf. Die Schwenkelementaufnahme weist längs einer ersten Schwenkebene einen Führungsschlitz mit einer, dem Durchmesser einer durchführbaren Gewindestange entsprechenden Breite auf. Die Schwenkmutter und ein beidseitig des Führungsschlitzes angeordneter Randbereich bilden jeweils zugeordnete Führungsflächen aus, die sattelförmig ausgebildet sind.

Die Aufgabe der Erfindung besteht in der Realisierung einer universalen Trägeranbindung für abgehängte Lasten, die in zwei Neigungsebenen steif festlegbar ist.

Die Aufgabe wird im Wesentlichen durch die Merkmale des Anspruchs 1 gelöst. Vorteilhafte Weiterbildungen ergeben sich aus den Unteransprüchen.

So weist eine Trägeranbindung für abgehängte Lasten ein Befestigungsmittel aufweisendes Trägeranschlussteil mit einer Schwenkelementaufnahme und eine zugeordnete, darin in zwei Schwenkebenen schwenkbar festlegbaren, Schwenkmutter mit einem Innengewinde auf, wobei die Schwenkelementaufnahme längs einer ersten Schwenkebene einen Führungsschlitz mit einer, dem Durchmesser einer durchführbaren Gewindestange entsprechenden, Breite aufweist, wobei die Schwenkmutter und ein beidseitig des Führungsschlitzes angeordneter Randbereich jeweils zugeordnete Führungsflächen ausbilden, die sattelförmig geformt sind.

Durch die topologisch sattelförmig geformten Führungsflächen mit jeweils genau einer konkaven und konvexen kanonischen Krümmung als Hauptkrümmungen ist die Schwenkmutter innerhalb des Trägeranschlussteils in zwei Schwenkebenen schwenkbar geführt.

Die Führungsfläche des Trägeranschlussteils weist längs des Führungsschlitzes eine konkave und quer zum Führungsschlitz eine konvexe kanonische Krümmung auf, wodurch eine durch die abgehängte Last verursachte Pressung der Führungsfläche durch den über die konvexe Krümmung verursachten Zwang im Falle einer Überlastung eine Selbstschliessung des Führungsschlitzes bis zum Anschlag an der durchgeführten Gewindestange bewirkt.

Vorteilhaft weist die Führungsfläche des Trägeranschlussteils einen Neigungsbereich grösser 90° längs des Führungsschlitzes, vorzugsweise 120°, und grösser 10 ° quer zum Führungsschlitz, vorzugsweise 20°, auf, wodurch bei Industriehallen die üblichen Dachneigungen bis 10 ° direkt ausgleichbar sind.

Vorteilhaft mündet der Führungsschlitz in eine Einführöffnung mit zumindest der doppelten Breite des Führungsschlitzes, wodurch eine vormontierte, bereits auf eine Gewindestange aufgeschraubte, Schwenkmutter in die Schwenkelementaufnahme einführbar ist.

Vorteilhaft weist die Einführöffnung zur Verriegelung einer eingeführten Schwenkmutter ein Sperrelement auf, vorzugsweise eine federnde Sperrklinke oder eine gegenüber dem Führungsschlitz angeordnete Barriere, die nur bei einer ausserhalb des Neigungsbereiches liegenden Einführrichtung der Schwenkmutter passierbar ist, wodurch ein unbeabsichtigtes Lösen der abgehängten Last aus dem Trägeranschlussteil sicher verhindert wird.

Vorteilhaft ist dem Innengewinde auf der, der Führungsfläche gegenüberliegenden, Endseite der Schwenkmutter eine innere Anschlagfläche zugeordnet, wodurch eine in das Innengewinde verschraubte Gewindestange bereits ohne eine zusätzliche Kontermutter axial fest mit der Schwenkmutter verklemmbar ist.

Vorteilhaft ist das Trägeranschlussteil in sich steif U-förmig ausgebildet mit einem Bogensegment mit der Schwenkelementaufnahme und zwei beidseitig längs zum Führungsschlitz benachbarten, parallel gegenüberliegenden Spannschenkeln mit Befestigungsmitteln, welche vorzugsweise Durchgangsbohrungen mit Innengewinde zur Befestigung von Spannbolzens sind, wodurch das Trägeranschlussteil in der Art einer Schraubzwinge an einer frei auskragenden Kante eines Trägerprofils befestigbar ist.

Vorteilhaft beträgt der Abstand zwischen den gegenüberliegenden Spannschenkeln mehr als das Doppelte der Flanschdicke des Trägerprofils, wodurch über einseitig zwischengelegte Distanzkörper eine gezielt schräge Montage bezüglich des Trägerprofils möglich ist.

Vorteilhaft weist das Trägeranschlussteil zwei diametral versetzt in einer Ebene liegende, vom Bogensegment mit der Schwenkelementaufnahme beidseitig quer zum Führungsschlitz benachbarte, flache Montageflansche mit Befestigungsmitteln auf, welche vorzugsweise Durchgangsbohrungen zur Durchführung eines Montagebolzens sind, wodurch das Trägeranschlussteil in der Art einer Schelle an einer freien Fläche festlegbar ist. Insbesondere sind damit zwei beidseitig eines Trägerprofils angeordnete Trägeranschlussteile mittels zweier Spannstangen gegenseitig kraftschlüssig festlegbar.

Vorteilhaft weist das Trägeranschlussteil sowohl zwei Spannschenkel als auch zwei Montageflansche auf, wodurch bei einem nur an einer frei auskragenden Kante eines T-Trägerprofils als Linienanschlag festgelegten Trägeranschlussteil ein Verkippen dessen durch die Spannschenkel verhindert werden kann. Zudem wird ein seitliches Wegrutschen des Trägeranschlussteils längs des profilartigen Trägerprofils verhindert. Das Trägeranschlussteil kann auch an einem quer zu einem Doppel-T-Trägerprofil oder Betonträger montierten Querschienenstück montiert werden, welches längs zwischen die gegenüberliegenden Spannschenkel eingepasst ist.

Alternativ vorteilhaft weist das Trägeranschlussteil zumindest einen, vorzugsweise zwei diametral versetzt in einer Ebene liegende, vom Bogensegment mit dem Führungsschlitz benachbart abgewinkelten Montageflansch mit Befestigungsmitteln auf, welche vorzugsweise Durchgangsbohrungen zur Durchführung eines Montagebolzens sind, wodurch das Trägeranschlussteil in der Art einer Schelle an einer freien Fläche befestigbar ist, insbesondere mittels Dübeln oder Ankern an Betonträgern. Zudem kann zur Abhängung einer weiteren Gewindestange unter das Trägeranschlussteil vorteilhaft ein Unterlegewinkel montiert werden, der vorteilhaft eine plastisch deformierbare Sollbiegestelle aufweist. Bei Verwendung einer in sich steifen Schienenrahmenkonstruktion zur Vermeidung unsymmetrischer Krafteinleitungen auf einen Trägerprofil kann das Trägeranschlussteil direkt an die Schienenrahmenkonstruktion montiert werden.

Vorteilhaft sind die als Durchgangsbohrungen ausgebildeten Befestigungsmittel als längs des Führungsschlitzes orientierte Langlöcher ausgeführt, wodurch eine variable Lage der Spannstangen, Spannbolzen oder Anker möglich ist.

Vorteilhaft ist die Trägeranbindung ein Bauteil eines in sich aufeinander konstruktiv abgestimmten Montagesystems bestehend aus beliebigen Gruppen von Trägeranbindungen, Querschienenstücken, Unterlegewinkeln, Schienenrahmenkonstruktionen, Gewindestangen, Spannbolzen und/oder Ankern, wodurch dem Nutzer für unterschiedliche Problemstellungen miteinander kombinierbare Bauteile zur Verfügung stehen.

Die Erfindung wird bezüglich eines vorteilhaften Ausführungsbeispiels näher erläutert mit:
- Fig. 1a, 1b: als Zweiseitenansichten der Trägeranbindung im Teilschnitt
- Fig. 2a, 2b, 2c: als Dreiseitenansichten des Trägeranschlussteils im Teilschnitt
- Fig. 3a, 3b, 3c: als Dreiseitenansichten der Schwenkmutter im Teilschnitt
- Fig. 4: als Dreiseitenansichten einer Variante des Trägeranschlussteils im Teilschnitt
- Fig. 5: als Anwendungsbeispiel
- Fig. 6: als alternatives Anwendungsbeispiel

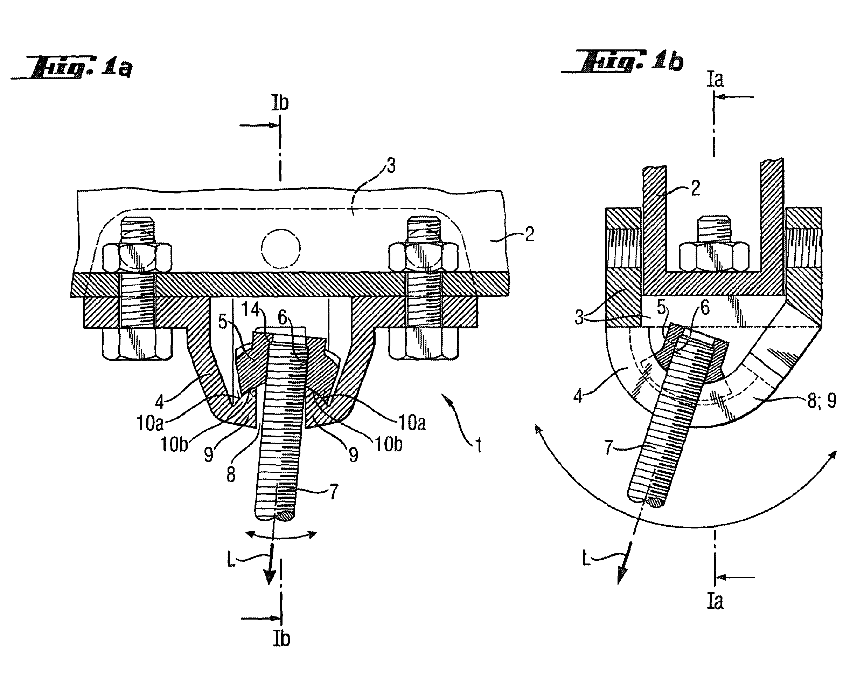

So weist nach den Fig. 1a, 1b eine in zwei Schwenkebenen Ia, Ib geschnitten dargestellte Trägeranbindung 1 für an einem Trägerprofil 2 abgehängte Lasten L ein Trägeranschlussteil 3 mit einer Schwenkelementaufnahme 4 und eine zugeordnete, darin in der Schwenkebene Ia, um 20° und in der Schwenkebene Ib um 120° schwenkbar festlegbaren, Schwenkmutter 5 mit einem Innengewinde 6 auf, in das eine Gewindestange 7 einschraubbar ist. Die Führungsfläche des Trägeranschlussteils weist einen Neigungsbereich längs des Führungsschlitzes von 120° und grösser 10 ° quer zum Führungsschlitz auf, wodurch bei Industriehallen die üblichen Dachneigungen bis 10° direkt ausgleichbar sind.

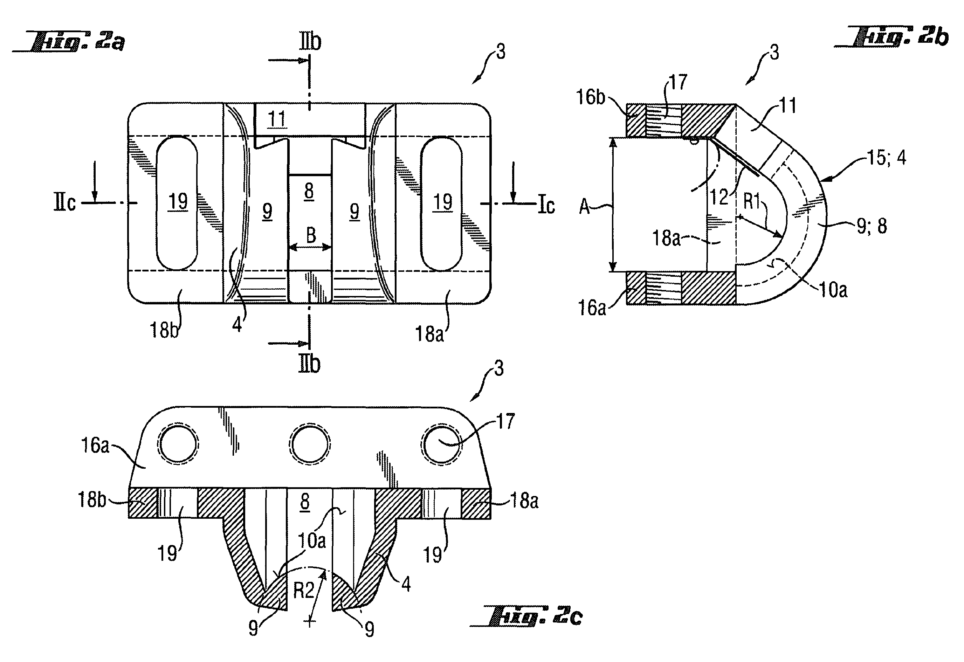

Die Schwenkelementaufnahme 4 weist nach den Fig. 2a, 2b, 2c längs einer ersten Schwenkebene IIb einen Führungsschlitz 8 mit einer Breite B auf. Beidseitig des Führungsschlitzes 8 ist ein Randbereich 9 angeordnet, der im Innern der Schwenkelementaufnahme 4 eine sattelförmig ausgeformte Führungsfläche 10a mit einer konstanten konkaven kanonischen Krümmung mit einem ersten Radius R1 längs des Führungsschlitzes 8 und einer konstanten konvexen kanonischen Krümmung mit einem zweiten Radius R2 quer zum Führungsschlitz 8 ausbildet. Der Führungsschlitz 8 mündet in eine Einführöffnung 11 mit der dreifachen Breite B des Führungsschlitzes 8. Die Einführöffnung weist zur Verriegelung einer eingeführten Schwenkmutter ein Sperrelement 12 in Form einer federnden Sperrklinke auf.

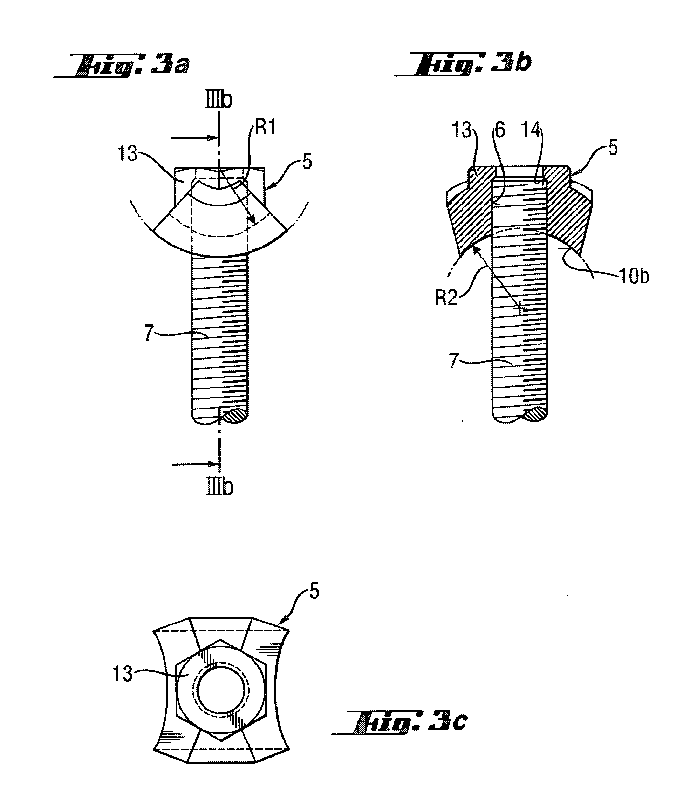

Der Führungsfläche 10a ist eine gegenteilig ausgeformten Führungsfläche 10b der Schwenkmutter 5 nach den Fig. 3a, 3b, 3c passend zugeordnet. Auf der, der Führungsfläche 10b gegenüberliegenden, Endseite 13 in Form eines Sechskantkopfes der Schwenkmutter 5 ist dem Innengewinde 6 eine innere Anschlagfläche 14 zugeordnet, an welche eine verschraubte Gewindestange 7 verklemmt ist.

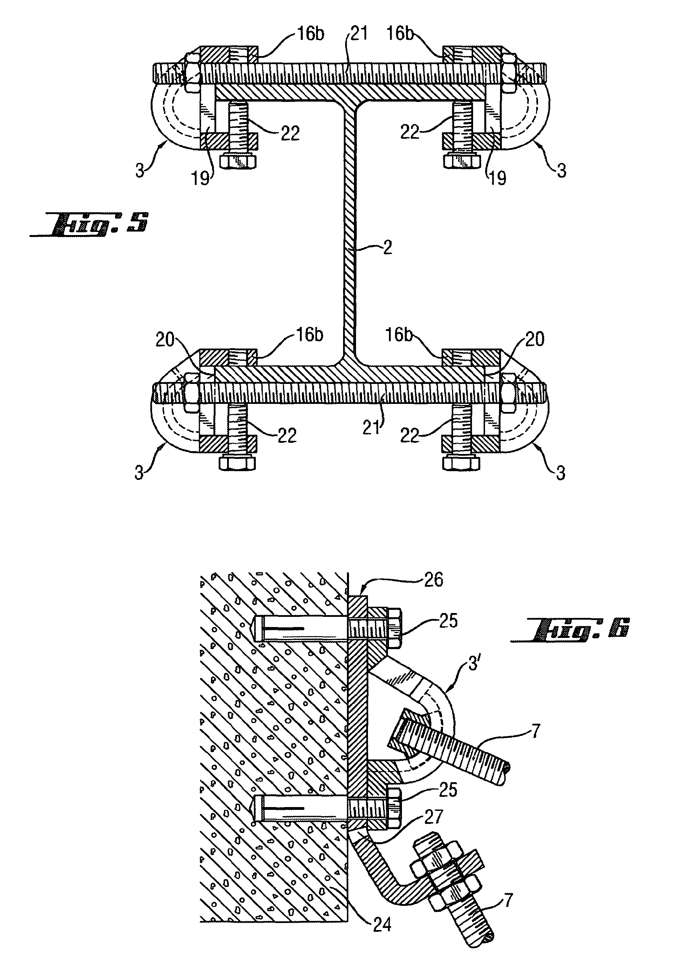

Das Trägeranschlussteil 3 ist in der Art einer Schraubzwinge in sich steif U-förmig ausgebildet mit einem Bogensegment 15 mit der Schwenkelementaufnahme 4 und zwei beidseitig längs zum Führungsschlitz 8 benachbarten, parallel gegenüberliegenden Spannschenkeln 16a, 16b mit Befestigungsmitteln in Form von Gewindebohrungen 17. Der Abstand A zwischen den gegenüberliegenden Spannschenkeln 16a, 16b beträgt mehr als die Summe der Flanschdicke des Trägerprofils 2 (Fig. 5) und dem Durchmesser einer zwischengelegten Spannstange 21 (Fig. 5). Zudem weist das Trägeranschlussteil 3 zwei diametral versetzt in einer Ebene liegende, vom Bogensegment 15 mit der Schwenkelementaufnahme 4 beidseitig quer zum Führungsschlitz benachbarte, flache Montageflansche 18a, 18b mit Befestigungsmitteln in Form von längs des Führungsschlitzes 8 orientierten Langlöchern 19 auf.

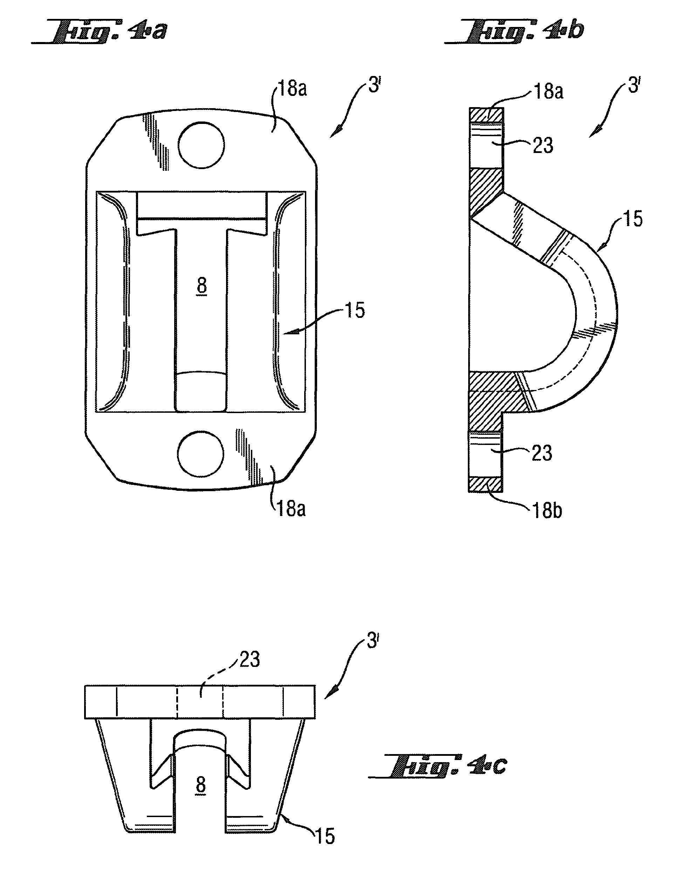

Nach Fig. 4a, 4b und 4c weist ein alternatives Trägeranschlussteil 3' zwei diametral versetzt in einer Ebene liegende, vom Bogensegment 15 mit dem Führungsschlitz 8 längs diesem benachbart abgewinkelte Montageflansche 18a, 18b mit Befestigungsmitteln in Form von Durchgangsbohrungen 23 auf.

Nach Fig. 5 sind an einem Doppel-T-förmigen Trägerprofil 2 vier Trägeranschlussteile 3 angeordnet. Jeweils zwei beidseitig des Trägerprofils 2 angeordnete und nur an einer frei auskragenden Kante 20 als Linienanschlag anliegende Trägeranschlussteile 3 sind mittels Spannstangen 21 gegenseitig kraftschlüssig festgelegt, wobei ein Verkippen der Trägeranschlussteile 3 durch die flach auf dem Trägerprofil 2 bzw. der Spannstangen 21 anliegenden und mittels Spannbolzen 22 kraftschlüssig verspannten Spannschenkel 16b verhindert wird ist.

Nach Fig. 6 ist das alternative Trägeranschlussteil 3' in der Art einer Schelle an einer freien seitlichen Fläche eines Betonträgerprofils 24 mittels Anker 25 befestigt, wobei zwischen dem Betonträger 24 und dem zur Aufnahme einer ersten Gewindestange 7 dienenden Trägeranschlussteil 3' zur Abhängung einer zweiten Gewindestange 7 ein Unterlegewinkel 26 montiert ist, der eine plastisch deformierte Sollbiegestelle 27 in Form eines Abschnitts mit Aussparungen aufweist.

## Patentansprüche

1. Trägeranbindung für abgehängte Lasten (L) mit einem Befestigungsmittel aufweisenden Trägeranschlussteil (3, 3') mit einer Schwenkelementaufnahme (4) und mit einer zugeordneten, darin in zumindest einer Schwenkebene (Ia, Ib) schwenkbar festlegbaren, Schwenkmutter (5) mit einem Innengewinde (6), wobei die Schwenkelemeitaufnahme (4) längs einer ersten Schwenkebene (Ib) einen Führungsschlitz (8) mit einer, dein Durchmesser einer durchführbaren Gewindestange (7) entsprechenden, Breite (B) aufweist,
wobei die Schwenkmutter (5) und ein beidseitig des Führuiigsschlitzes (8) angeordneter Randbereich (9) jeweils zugeordnete Führungsflächen (10a, 10b) ausbilden, die sattelförmig geformt sind,
**dadurch gekennzeichnet, dass** die Führungsfläche (10a. 10b) des Trägeranschlussteils (3, 3') längs des Führungsschlitzes (8) eine konkave und quer zum Führungsschlitz (8) eine konvexe kanonische Krümmung aufweist.

2. Trägeranbindung nach Anspruch 1 **dadurch gekennzeichnet, dass** die Führungsflächen (10a, 10b) überall jeweils konstante kanonische Krümmungen aufweisen.

3. Trägeranbindung nach Anspruch 1 oder 2 **dadurch gekennzeichnet, dass** die Führungsfläche (10a, 10b) des Trägeranschlussteils (3, 3') einen Neigungsbereich grösser 90° längs des Führungsschlitzes (8) und grösser 10 ° quer zum Führungsschlitz (8) aufweist.

4. Trägeranbindung nach einem der vorherigen Ansprüche, **dadurch gekennzeichnet, dass** der Führungsschlitz (8) in eine Einführöffnung (11) mit zumindest der doppelten Breite (B) des Führungsschlitzes (8) mündet.

5. Trägeranbindung nach einem der vorherigen Ansprüche, **dadurch gekennzeichnet, dass** die Einführöffnung (11) zur Verriegelung einer eingeführten Schwenkmutter (5) ein Sperrelement (12) aufweist, optional eine federnde Sperrklinke oder eine gegenüber dem Führungsschlitz (8) angeordnete Barriere.

6. Trägeranbindung nach einem der vorherigen Ansprüche, **dadurch gekennzeichnet, dass** dem Innengewinde (6) auf der, der Führungsfläche (10b) gegenüberliegende n, Endseite (13) der Schwenkmutter (5) eine innere Anschlagfläche (14) zugeordnet ist.

7. Trägeranbindung nach einem der vorherigen Ansprüche, **dadurch gekennzeichnet, dass** das Trägeranschlussteil (3, 3') in sich steif U-förmig ausgebildet ist mit einem Bogensegment (15) mit der Schwenkelementaufnahme (4) und zwei beidseitig längs zum Führungsschlitz (8) benachbarten, parallel gegenüberliegenden Spannschenkeln (13a, 16b) mit Befestigungsmitteln.

8. Trägeranbindung nach Anspruch 7, **dadurch gekennzeichnet, dass** der Abstand (A) zwischen den gegenüberliegenden Spannschenkeln (16a, 16b) mehr als das Doppelte der Flanschdicke eines Trägerprofils (2) beträgt.

9. Trägeranbindung nach einem der vorherigen Ansprüche, **dadurch gekennzeichnet, dass** das Trägeranschlussteil (3, 3') zwei diametral versetzt in einer Ebene liegende, vom Bogensegment (15) mit der Schwenkelementaufnahme (4) beidsei:ig quer zum Führungsschlitz (8) benachbarte Montageflansche (18a, 18b) mit Befestigungsmitteln aufweist.

10. Trägeranbindung nach einem der vorherigen Ansprüche, **dadurch gekennzeichnet, dass** das Trägeranschlussteil (3, 3') sowohl zwei Spannschenkel (16a, 16b) als auch zwei Montageflansche (18a, 18b) aufweist.

11. Trägeranbindung nach einem der Ansprüche 1 bis 6, **dadurch gekennzeichnet, dass** das Trägeranschlussteil (3, 3') zumindest einen, vom Bogensegment (15) mit dem Führungsschlitz (8) benachbart abgewinkelten, flächen Montageflansch (18a, 18b) mit Befestigungsmitteln aufweist.

12. Trägeranbindung nach einem der vorherigen Ansprüche, **dadurch gekennzeichnet, dass** die Befestigungsmittel als längs des Führungsschlitzes (8) orientierte Langlöcher (19) ausgeführt sind.

13. Trägeranbindung nach einem der vorherigen Ansprüche, **dadurch gekennzeichnet, dass** diese ein Bauteil eines in sich aufeinander konstruktiv abgestimmten Montagesystems ist, bestehend aus beliebigen Gruppen von Trägeranbindungen (3, 3'), Trägerprofilen (2), Unterlegewinkeln (26), Schienenrahmenkonstruktionen, Gewindestangen (7') Spannstangen (21), Spannbolzen (22) und/oder Ankern (25).

## Claims

1. Girder tie for suspended loads (L), with a girder connection piece (3, 3') provided with fastening means, with a pivotal-element holder (4) for a pivotal element and with a pivotal nut (5) with an internal screw thread (6) cooperating therewith and locatable pivotably in at least one pivotal plane (Ia, Ib), the pivotal-element holder (4) having a guide slot (8) orientated in a first pivotal plane (Ib) with a width (B) corresponding to the diameter of a threaded rod (7) insertable therethrough, the pivotal nut (5) and a marginal region (9) on either side of the guide slot (8) forming cooperating saddle-shaped guide faces (10a, 10b), **characterized in that** the guide face (10a, 10b) of the girder connection piece (3, 3') has concave curvature along the guide slot (8) and convex canonical curvature at right angles to the guide slot (8).

2. Girder tie according to Claim 1, **characterized in that** the guide faces (10a, 10b) respectively have canonical curvatures that are constant throughout.

3. Girder tie according to Claim 1 or Claim 2, **characterized in that** the guide face (10a, 10b) of the girder connection piece (3, 3') has a tilting range of more than 90° along the guide slot (8) and more than 10° at right angles to the guide slot (8).

4. Girder tie according to any one of the preceding claims, **characterized in that** the guide slot (8) communicates with an insertion opening (11) with at least twice the width (B) of the guide slot (8).

5. Girder tie according to any one of the preceding claims, **characterized in that** the insertion opening (11) has a blocking element (12) for trapping an inserted pivotal nut (5): optionally a spring latch or a barrier arranged opposite the guide slot (8).

6. Girder tie according to any one of the preceding claims, **characterized in that** an inner stop face (14) is assigned to the internal thread (6) at the opposite end (13) of the pivotal nut (5) to the guide face (10b).

7. Girder tie according to any one of the preceding claims, **characterized in that** the girder connection piece (3, 3') is formed as an inherently rigid "U" with a curved segment (15) with the pivotal-element holder (4) and two parallel and opposite clamping webs (16a, 16b), with fastening means, adjoining on either side, longitudinally with respect to the guide slot (8).

8. Girder tie according to Claim 7, **characterized in that** the distance (A) between the opposite clamping webs (16a, 16b) is more than twice the thickness of the flange of the girder section (2).

9. Girder tie according to any one of the preceding claims, **characterized in that** the girder connection piece (3. 3') has two erection flanges (18a, 18b), with fastening means, located diametrically opposite in one plane and adjoining the curved segment (15) with the pivotal-element holder (4) on either side, at right angles to the guide slot (8).

10. Girder tie according to any one of the preceding claims, **characterized in that** the girder connection piece (3. 3') has two clamping webs (16a, 16b) and two erection flanges (18a, 18b).

11. Girder tie according to any one of Claims 1 to 6, **characterized in that** the girder connection piece (3, 3') has at least one angled, flat erection flange (18a, 18b), with fastening means, adjoining the curved segment (15) with the guide slot (8).

12. Girder tie according to any one of the preceding claims, **characterized in that** the fastening means are realized as elongated slots (19) orientated in the same direction as the guide slot (8).

13. Girder tie according to any one of the preceding claims, **characterized in that** the tie is one component in a coordinated erection system consisting of combinations of g rder ties (3, 3'), girder sections (2), angle pads (26), rail frame constructions, threaded rods (7), clamping rods (21), clamping bolts (22) and/or anchor bolts (25).

## Revendications

1. Liaison porteuse pour charges suspendues (L), comprenant une pièce de liaison porteuse (3, 3') munie de moyens de fixation et d'un moyen de réception d'éléments oscillants (4) et comprenant un écrou oscillant associé (5) blocable en pivotement dans au moins un plan de pivotement (Ia, Ib) et pourvu d'un taraudage (6), le moyen de réception d'éléments oscillants (4) comportait, le long d'un premier plan de pivotement (Ib), une fente de guidage (8) d'une largeur (B) correspondant au diamètre d'une tige filetée traversante (7), l'écrou oscillant (5) et une zone de bord (9) ménagée de part et d'autre de la fente de guidage (8) déterminant des surfaces de guidage associées (10a, 10b) en forme de selles, **caractérisée en ce que** la surface de guidage (10a, 10b) de la pièce de liaison porteuse (3, 3') présente, le long de la fente de guidage (8), une courbure canonique concave et, transversalement à la fente de guidage (8), une courbure canonique convexe.

2. Liaison porteuse selon la revendication 1, **caractérisée en ce que** les surfaces de guidage (10a, 10b) présentent partout des courbures canoniques constantes.

3. Liaison porteuse selon la revendication 1 ou 2, **caractérisée en ce que** la surface de guidage (1)a, 10b) de la pièce de liaison porteuse (3, 3') présents une zone d'inclinaison supérieure à 90° le long de la fente de guidage (8) et supérieure à 10° transversalement à la fente de guidage (8).

4. Liaison porteuse selon une des revendications précédentes, **caractérisée en ce que** la fente de guidage (8) débouche dans une ouverture d'introduction (11) possédant au moins deux fois la largeur (B) de la fente de guidage (8).

5. Liaison porteuse selon une des revendications précédentes, **caractérisée en ce que**, pour verrouiller un écrou oscillant introduit (5), l'ouverture d'introduction (11) comporte un élément de blocage (12), optionnellement un cliquet d'arrêt élastique ou une barrière disposée en face de la fente de guidage (8).

6. Liaison porteuse selon une des revendications précédentes, **caractérisée en ce que,** sur le côté extrême (13) de l'écrou oscillant (5) situé à l'opposé de la surface de guidage (10b), une surface de butée intérieure (14) est associée au taraudage (6).

7. Liaison porteuse selon une des revendications précédentes, **caractérisée en ce que** la pièce de liaison porteuse (3, 3') est conformé en U rigide avec un segment arqué (15) pourvu du moyen de réception d'éléments oscillants (4) et deux branches de serrage (16a, 16b) opposées en parallèle, voisines de part et d'autre le long de la fente de guidage (8) et pourvues de moyens de fixation.

8. Liaison porteuse selon la revendication 7, **caractérisé en ce que** à distance (A) entre les branches de serrage opposées (16a, 16b) est supérieure au double de l'épaisseur de semelle d'un profilé porteur (2).

9. Liaison porteuse selon une des revendication précédente, **caractérisée en ce que** la pièce de liaison porteuse (3, 3') comporte deux brides de montage (18a, 18b) qui sont décalées diamétralement dans un plan, voisines du segment arqué (15) pourvu du moyen de réception d'éléments oscillants (4), de part et d'autre de celui-ci transversalement à la fente de guidage (8), et pourvues de moyens de fixation.

10. Liaison porteuse selon une des revendications précédentes, **caractérisé en ce que** la pièce de liaison porteuse (3, 3') comporte aussi bien deux branches de serrage (16a, 16b) que deux brides de montage (18a, 18b).

11. Liaison porteuse selon une des revendications 1 à 6, **caractérisé en ce que** la pièce de liaison porteuse (3, 3') comporte au moins une bride de montage plate coudée (18a, 18b) qui est voisine du segment arqué (15) pourvu de la fente de guidage (8) et est munie de moyens de fixation.

12. Liaison porteuse selon une des revendications précédentes, **caractérisée en ce que** les moyens de fixation sont conformés en trous oblongs (19) orientés le long de la fente de guidage (8).

13. Liaison porteuse selon une des revendications précédentes, **caractérisée en ce qu'**elle est un composant d'un système de montage constructivement cohérent, constitué de groupes quelconques de liaisons porteuses (3, 3'), de profilés porteurs (2), de cornières insérées (26), de structures à cadres profilés, de tiges filetées (7), de tiges de serrage (21), de goujons de serrage (22) et/ou de dispositifs d'ancrage (25).
